# FASCICULE DE BREVET EUROPEEN

(11) **EP 2 558 750 B1**
(45) Date de publication et mention de la délivrance du brevet: **02.09.2015**
(21) Numéro de dépôt: 11713299.3
(22) Date de dépôt: 11.04.2011
(51) Int. Cl.: F16J 15/34, F16J 15/36

(54) **ÉLEMENT D'ÉTANCHÉITE À RONDELLE CONIQUE ÉLASTIQUE ET ENVELOPPE POUR EXERCER UN TARAGE**
DICHTELEMENT MIT ELASTISCHEM KONISCHEN RING UND HÜLLE ZUM AUSÜBEN VON DRUCK
SEALING ELEMENT HAVING A RESILIENT CONICAL RING AND ENVELOPE FOR EXERTING PRESSURE

(30) Priorité: 14.04.2010 FR 1052848
(43) Date de publication de la demande: 20.02.2013
(73) Titulaire: Commissariat à l'Énergie Atomique et aux Énergies Alternatives, 75015 Paris (FR); Technetics Group France SAS, 42000 Saint-Etienne (FR)
(72) Inventeur: GUIMET, Laurent, F-42240 Unieux (FR); MORICE, Ludovic, F-42100 Saint-Etienne (FR); LEFRANCOIS, Michel, F-42000 Saint-Etienne (FR); JULIAA, Jean-François, F-26200 Montelimar (FR)
(74) Mandataire: Ilgart, Jean-Christophe
(86) Numéro de dépôt international: PCT/EP2011/055618
(87) Numéro de publication internationale: WO 2011/128289

(56) Documents cités:
- WO-A1-86/04655
- DE-B- 1 074 342
- DE-C1- 19 846 124
- FR-A5- 2 254 989
- US-A- 3 480 285

## Description

### DOMAINE TECHNIQUE

L'invention présente se rapporte à un élément d'étanchéité comprenant une rondelle conique élastique et une enveloppe pour exercer un tarage.

Certains dispositifs d'étanchéité entre un rotor et un stator fonctionnent par contact axial entre deux blocs, l'un lié au stator et l'autre relié au rotor. A la zone de contact entre les blocs, des éléments d'étanchéité adéquats en contact axial, liés rigidement respectivement aux blocs du rotor et stator ou confondus avec eux, permettent de par ce contact d'obtenir l'étanchéité entre les parties rotor et stator. Afin de maintenir l'étanchéité, notamment lors de l'usure desdits éléments d'étanchéité, un des blocs, dénommé ci-après « bloc mobile », conserve un degré de liberté dans le sens axial, et le contact axial avec le deuxième bloc est assuré par un élément élastique poussant le bloc mobile. Il apparaît ainsi une notion de « tarage du dispositif d'étanchéité ». Par ailleurs, des éléments d'étanchéité secondaires sont disposés entre le bloc de stator et le stator, ainsi qu'entre le bloc de rotor et le rotor. Dans certaines conceptions, des éléments mécaniques permettent de rassembler en une pièce les fonctions d'étanchéité secondaire et de tarage du bloc mobile. Une construction usuelle consiste à les pourvoir d'une âme en rondelle conique élastique dont la déformation détermine cet effort. L'étanchéité de ces éléments secondaires disposés entre deux pièces sans rotation relative et exerçant donc une étanchéité statique est assurée par une enveloppe, généralement en élastomère, entourant complètement la rondelle élastique. Une telle conception est divulguée entre autres par le document WO-A-86/004655.

Un avantage de tels dispositifs est que les éléments secondaires d'étanchéité sont de conception simple. Un autre est que, moyennant une construction appropriée des dispositifs, les impuretés du milieu confiné, qui peuvent comprendre des particules abrasives, sont repoussées par les forces centrifuges vers les éléments secondaires d'étanchéité plutôt que vers le joint principal, où elles risqueraient de produire des dégâts entre les portions en rotation. Un inconvénient provient cependant de l'utilisation d'une enveloppe en élastomère, qui résiste seulement aux basses températures. D'autres éléments d'étanchéité secondaires statiques, comme des soufflets métalliques, sont donc employés pour des températures plus élevées ; ces soufflets étant en général reliés aux pièces entre lesquelles ils s'étendent par des soudures, leur étanchéité est excellente, mais les impuretés solides refoulées vers eux tendent à s'accumuler entre leurs ondes et à modifier finalement la valeur de l'effort de tarage qu'ils transmettent, ce qui peut rendre le dispositif inutilisable.

L'objet de l'invention a été de proposer un élément d'étanchéité secondaire comprenant une rondelle conique, assurant la transmission de l'effort de tarage à une autre portion du dispositif, et une enveloppe de la rondelle, assurant l'étanchéité et construite en une matière résistante à une température élevée. Plus précisément, on a été amené à proposer une conception perfectionnée de l'élément d'étanchéité secondaire et statique en sauvegardant la capacité étanchéifiante de l'enveloppe malgré la nécessité d'utiliser des matières beaucoup moins déformables que les élastomères pour la construire, et donc moins aptes à épouser la forme des surfaces des pièces opposées et à compenser les variations de déformation que la rondelle élastique subit d'après l'effort de tarage qui est demandé. L'invention permet également de pallier les difficultés de fabrication inhérentes à l'utilisation d'un matériau d'étanchéité moins déformable qu'un élastomère.

Une définition de l'élément est donc un élément d'étanchéité, comprenant une rondelle conique élastique et une enveloppe entourant la rondelle et possédant des portions d'appui étanche à une circonférence extérieure et une circonférence intérieure, où l'enveloppe comprend une bande continue devant une face de la rondelle et des bords recourbés aux portions d'appui, les bords recourbés comprenant des extrémités s'étendant devant une partie d'une face opposée de la rondelle, et caractérisé en ce qu'il comprend deux rondelles d'appui logées respectivement entre la rondelle élastique et les extrémités des bords recourbés.

Les rondelles d'appui ont la fonction principale d'appliquer les bords recourbés de l'enveloppe contre les faces d'appui environnantes orientées en direction axiale ou radiale et donc d'assurer l'étanchéité.

La rondelle élastique peut avantageusement être crénelée, monobloc, composée de secteurs adjacents mais séparés à au moins une périphérie ; notamment faite d'un motif répété de multiples fois et composée ainsi de segments radiaux alternant avec des segments de circonférence extérieure et de circonférence intérieure. Une telle rondelle offre une plus grande liberté de fabrication pour lui attribuer une raideur et une course possible de déformation, c'est-à-dire pour déterminer à volonté l'effort de tarage. La pression exercée sur l'enveloppe par une telle rondelle crénelée serait irrégulière, moins forte entre les secteurs, ce qui pourrait nuire à l'étanchéité. Cela est toutefois évité grâce aux rondelles d'appui, continues sur leur circonférence et qui rétablissent donc l'uniformité de pression sur l'enveloppe.

Cette dernière peut être construite en PTFE, et notamment en PTFE dit restructuré, qui a la particularité de fluer moins que le PTFE ordinaire et donc de mieux tenir l'étanchéité avec le temps.

L'une au moins des rondelles d'appui (de préférence les deux) présente avantageusement un bourrelet dirigé vers le bord recourbé de l'enveloppe et qui concentre l'effort de pression responsable de l'étanchéité sur une ligne déterminée, ce qui garantit mieux la qualité de celle-ci. Le bourrelet peut être dirigé à l'opposite de la rondelle élastique afin d'établir une pression en direction axiale de l'élément contre l'extrémité du bord recourbé, ou dirigé radialement au-delà de la rondelle élastique, de manière à exercer une pression radiale ; il peut aussi comprendre ces deux caractéristiques à la fois. Le bourrelet radial permet encore de rendre invariable la position des rondelles d'appui à l'égard de l'enveloppe quelles que soient les déformations de la rondelle élastique.

La position bien centrée des rondelles d'appui peut être maintenue si la rondelle élastique présente au moins une encoche circulaire de butée de ces rondelles. Selon un autre perfectionnement, une rondelle métallique peut être ajoutée sur une face intérieure ou sur la face opposée de la bande principale de l'enveloppe, afin de la protéger de fluides corrosifs pouvant se trouver de ce côté. Cette rondelle métallique, qui s'apparente plutôt à un revêtement, est de toute façon plus fine que la rondelle élastique et les rondelles d'appui, et ne doit guère contribuer à la raideur de l'élément.

Les rondelles d'appui peuvent enfin être séparées, ou au contraire reliées entre elles par une entretoise plus fine.

L'invention sera maintenant décrite en liaison aux figures, qui en représentent une réalisation. La figure 1 représente un élément conforme à l'invention en coupe transversale, les figures 2 et 3 les détails des deux extrémités de cette coupe, la figure 4 la rondelle élastique et la figure 5 l'enveloppe avant fabrication.

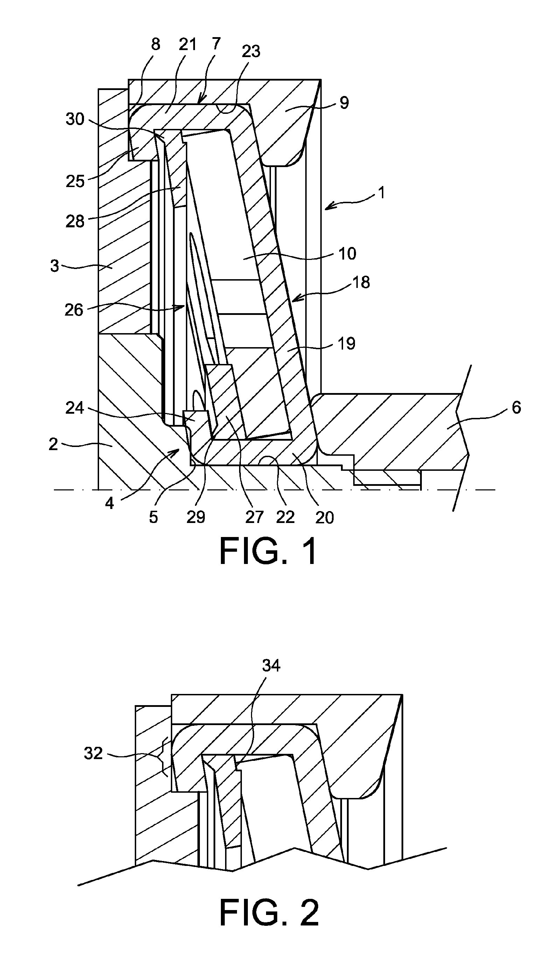

On se rapporte d'abord à la figure 1. L'élément d'étanchéité (1) conforme à l'invention est disposé ici entre un arbre tournant (2) principal d'un rotor, et un bloc d'étanchéité (3) entourant l'arbre (2), tournant avec lui mais sans lui être fixé. L'élément d'étanchéité (1) est de forme générale circulaire et tronconique, concentrique à l'axe de rotation (X) du rotor. Ses autres coupes sont à peu près semblables à celui-ci. Le bloc (3) fait typiquement partie d'un dispositif d'étanchéité comprenant encore un joint d'étanchéité principale d'un côté opposé à l'élément d'étanchéité (1), puis un bloc d'étanchéité fixe dans le prolongement du bloc (3) et un autre élément secondaire d'étanchéité, pouvant être analogue à l'élément d'étanchéité (1), reliant le second bloc à un stator. Ce dispositif étranger à l'invention n'a pas été représenté, mais on pourra se reporter au brevet indiqué plus haut pour une description plus complète. Le bloc (3) coulisse autour de l'arbre (2) de façon à exercer un effort réglable sur le joint d'étanchéité principale. L'élément d'étanchéité (1) participe à la transmission de cet effort. Son extrémité intérieure (4) est comprimée entre une portée plane (5), dirigée axialement, de l'arbre (2) et une portée de même genre appartenant à une bague de serrage (6) vissée sur l'arbre (2). L'extrémité extérieure (7) de l'élément d'étanchéité (1) est de même comprimée entre une portée plane (8), dirigée axialement, du bloc (3) et une portée du même genre d'une bague de serrage (9) vissée sur le bloc (3).

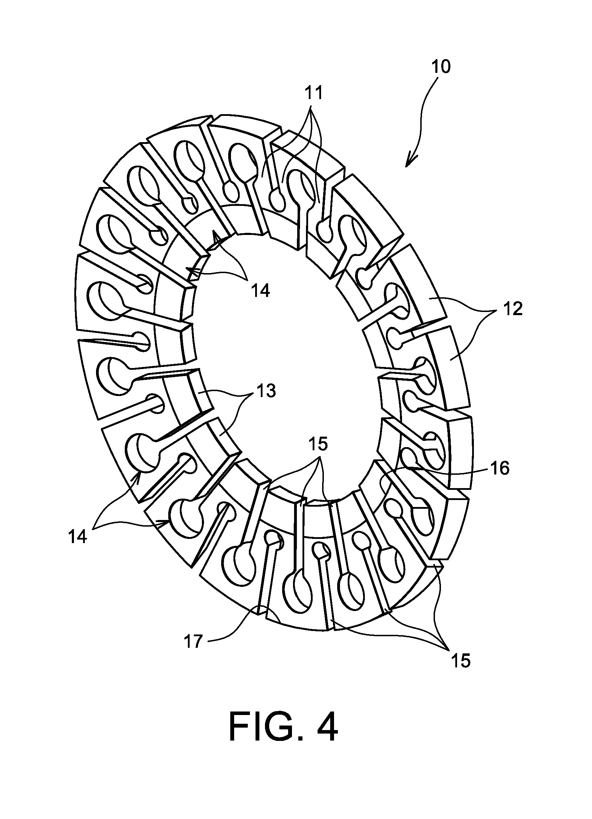

L'élément d'étanchéité (1) comprend une rondelle élastique (10) conique qui en constitue l'âme, représentée complètement à la figure 4. Elle est composée d'un motif répété de multiples fois pour donner alternativement des segments (11) dirigés radialement et des segments de circonférence extérieure (12) ou intérieure (13). L'ensemble forme, en considérant une des circonférences ou l'autre, des secteurs (14) alternant avec des créneaux (15). Une face de la rondelle élastique (10) possède encore une encoche intérieure (16) et une encoche extérieure (17), toutes deux circulaires et qui seront décrites plus loin.

L'élément d'étanchéité (1) comprend encore une enveloppe extérieure (18) composée d'une bande (19) continue devant la rondelle élastique (10), qui s'appuie sur elle, d'un bord recourbé intérieur (20) et d'un bord recourbé extérieur (21) joints à la bande (19) et qui s'appuient sur des portées circulaires (22 et 23) de l'arbre (2) et de la bague de serrage (9). Les bords recourbés (20 et 21) comprennent des extrémités (24 et 25) à angle droit, en appui sur les portées planes (5 et 8). La matière de l'enveloppe est ductile, métallique par exemple, pour bien s'ajuster aux surfaces sur lesquelles elle s'appuie. L'enveloppe (18) entoure donc un logement (26) partiellement refermé par les extrémités (24 et 25) et qui contient, outre la rondelle élastique (10), une rondelle d'appui intérieure (27) et une rondelle d'appui extérieure (28) dont la première est retenue contre le bord recourbé intérieur (20) et la seconde contre le bord recourbé extérieur (21). Toutes les rondelles (10, 27, 28) sont retenues par les extrémités des bords recourbés (20 et 21).

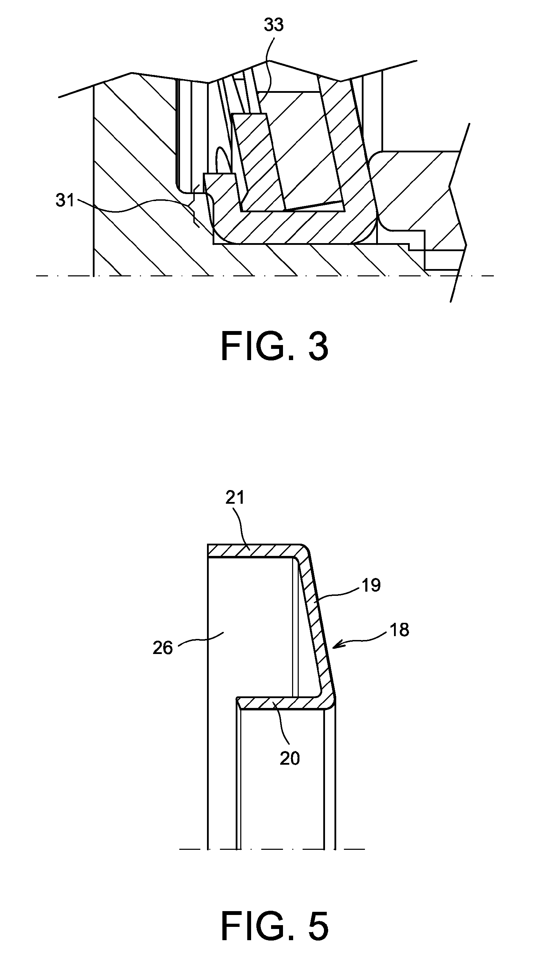

Les rondelles d'appui (27 et 28) sont essentiellement coniques, à un angle de conicité voisin de celui de la rondelle élastique (10), et comportent un bourrelet, respectivement (29 et 30), proéminent en direction à la fois axiale et radiale, en contact avec le bord recourbé (20 ou 21) de l'enveloppe (18). Chacun de ces bourrelets (29 et 30) permet la transmission de l'effort de compression produit par la bague de serrage (6 ou 9) à travers l'élément d'étanchéité (1), en pressant contre l'extrémité recourbée (24 ou 25), et assure donc le contact avec pression de l'extrémité recourbée (24 ou 25) sur la portée axiale (5 ou 8), à des régions (31 ou 32) représentées aux figures 2 et 3. La compression établie à cet endroit assure donc une étanchéité. Les proéminences radiales des bourrelets (29 et 30) maintiennent de même les extrémités recourbées (20 et 21) contre les portées circulaires (22 et 23) et renforcent aussi l'étanchéité. Les irrégularités de pression dues à l'alternance des secteurs (14) et des créneaux (15) sont supprimées par les rondelles d'appui (27 et 28). Les rondelles d'appui (27 et 28) s'appuient sur la rondelle élastique (10) en formant dans des embrèvements (33 et 34) à la limite des encoches (16 et 17). Leur centrage est ainsi maintenu et avec lui la cohésion de la garniture de l'élément d'étanchéité (1) : la position des régions d'étanchéité (31 et 32) n'est pas modifiée malgré les déformations de la rondelle élastique (10).

Les rondelles d'appui (27 et 28) peuvent être séparées ou unies par une entretoise (35) plus fine et déformable, qui les maintient légèrement sans modifier leurs positions, définies par les autres constituants de l'élément d'étanchéité (1). L'enveloppe (18) et en particulier la bande (19) peut porter une rondelle fine (36 ou 37) à l'une de ses faces, contre la rondelle élastique (10) sur les bagues de serrage (6 et 9), pour la protéger.

L'enveloppe (18) peut être fabriquée par déformation plastique d'une bande circulaire, plane au départ, du matériau désiré. Il peut s'agir de PTFE et notamment de PTFE restructuré tel celui que vend la société Garlock sous le nom de Gylon. D'autres matériaux peuvent convenir à condition de posséder une ductilité suffisante pour s'ajuster aux parties avoisinantes et établir une étanchéité avec elles sous l'effet de la pression des rondelles. Ces dernières sont généralement métalliques. Le logement (26) est formé, ainsi que le montre la figure 5, en repoussant les bords recourbés (20 et 21), puis les rondelles sont installées dans le logement (26) et les extrémités (24 et 25) des bords recourbés (20 et 21) sont pliées.

## Revendications

1. Elément d'étanchéité (1), comprenant une rondelle conique (10) élastique et une enveloppe (18) ductile entourant la rondelle et possédant des portions d'appui étanche à une circonférence extérieure et une circonférence intérieure, où l'enveloppe (18) comprend une bande continue (19) devant une face de la rondelle et des bords recourbés (20, 21) aux portions d'appui, les bords recourbés comprenant des extrémités (24, 25) s'étendant devant une partie d'une face opposée de la rondelle élastique (10), et **caractérisé en ce qu'**il comprend deux rondelles d'appui (27, 28) logées respectivement entre la rondelle élastique et les extrémités des bords recourbés.

2. Elément d'étanchéité selon la revendication 1, **caractérisé en ce que** la rondelle élastique (10) est crénelée, composée de secteurs (14) adjacents mais séparés à au moins une périphérie.

3. Elément d'étanchéité selon la revendication 2, **caractérisé en ce que** la rondelle élastique (10) est formée d'un motif répété de multiple fois et composé de segments radiaux (11) alternant avec des segments de circonférence extérieure (12) et des segments de circonférence intérieure (13).

4. Elément d'étanchéité selon l'une quelconque des revendications 1 à 3, **caractérisé en ce que** l'enveloppe est en PTFE.

5. Elément d'étanchéité selon la revendication 4, **caractérisé en ce que** le PTFE est restructuré.

6. Elément d'étanchéité selon l'une quelconque des revendications 1 à 5, **caractérisé en ce que** l'une au moins des rondelles d'appui présente un bourrelet (29, 30) dirigé à l'opposite de la rondelle élastique et contre l'extrémité (24, 25) du bord recourbé (20, 21).

7. Elément d'étanchéité selon l'une quelconque des revendications 1 à 6, **caractérisé en ce que** l'une au moins des rondelles d'appui présente un bourrelet (29, 30) dirigé radialement au-delà de la rondelle élastique (10) et contre le bord recourbé (20, 21).

8. Elément d'étanchéité selon l'une quelconque des revendications 1 à 7, **caractérisé en ce que** la rondelle élastique (10) présente au moins une encoche circulaire (16, 17) de butée d'une des rondelles d'appui (26, 27).

9. Elément d'étanchéité selon l'une quelconque des revendications 1 à 8, **caractérisé en ce qu'**il comprend une rondelle métallique, plus fine que la rondelle élastique et les rondelles d'appui, sur une face intérieure ou une face extérieure de la bande de l'enveloppe.

10. Elément d'étanchéité selon l'une quelconque des revendications 1 à 9, **caractérisé en ce que** les rondelles d'appui sont reliées par une entretoise plus fine.

## Patentansprüche

1. Dichtelement (1), umfassend einen elastischen konischen Ring (10) und eine duktile Hülle (18), die den Ring umgibt und Bereiche zum dichten Andrücken an einen Außenumfang und einen Innenumfang besitzt, wobei die Hülle (18) ein durchgehendes Band (19) vor einer Fläche des Rings und umgebogene Ränder (20, 21) an den Andrückbereichen umfasst, wobei die umgebogenen Ränder Enden (24, 25) umfassen, die sich vor einen Teil einer gegenüberliegenden Fläche des elastischen Rings (10) erstrecken, und **dadurch gekennzeichnet, dass** es zwei Andrückringe (27, 28) umfasst, die jeweils zwischen dem elastischen Ring und den Enden der umgebogenen Ränder aufgenommen sind.

2. Dichtelement nach Anspruch 1, **dadurch gekennzeichnet, dass** der elastische Ring (10) eingekerbt ist, gebildet durch Sektoren (14), die benachbart sind, jedoch an wenigstens einem Umfang getrennt.

3. Dichtelement nach Anspruch 2, **dadurch gekennzeichnet, dass** der elastische Ring (10) aus einem sich mehrfach wiederholenden Motiv gebildet und aus alternierenden radialen Segmenten (11) zusammengesetzt ist, mit Außenumfangssegmenten (12) und mit Innenumfangssegmenten (13).

4. Dichtelement nach einem der Ansprüche 1 bis 3, **dadurch gekennzeichnet, dass** die Hülle aus PTFE ist.

5. Dichtelement nach Anspruch 4, **dadurch gekennzeichnet, dass** das PTFE umstrukturiert ist.

6. Dichtelement nach einem der Ansprüche 1 bis 5, **dadurch gekennzeichnet, dass** wenigstens einer der Andrückringe einen Wulst (29, 30) aufweist, der gegenteilig zum elastischen Ring und gegen das Ende (24, 25) des umgebogenen Rands (20, 21) ausgerichtet ist.

7. Dichtelement nach einem der Ansprüche 1 bis 6, **dadurch gekennzeichnet, dass** wenigstens einer der Andrückringe einen Wulst (29, 30) aufweist, der radial über den elastischen Ring (10) hinaus und gegen den umgebogenen Rand (20, 21) ausgerichtet ist.

8. Dichtelement nach einem der Ansprüche 1 bis 7, **dadurch gekennzeichnet, dass** der elastische Ring (10) wenigstens eine kreisförmige Einkerbung (16, 17) als Anschlag für einen der Andrückringe (26, 27) aufweist.

9. Dichtelement nach einem der Ansprüche 1 bis 8, **dadurch gekennzeichnet, dass** es an einer Innenfläche oder einer Außenfläche des Bands der Hülle einen metallischen Ring umfasst, der dünner ist als der elastische Ring und die Andrückringe.

10. Dichtelement nach einem der Ansprüche 1 bis 9, **dadurch gekennzeichnet, dass** die Andrückringe durch ein dünneres Verbindungselement verbunden sind.

## Claims

1. A sealing element (1), including an elastic tapered washer (10) and a ductile casing (18) surrounding the washer, and having seal support portions on an outer circumference and an inner circumference, wherein the casing (18) includes a continuous strip (19) in front of one face of the washer, and curved edges (20, 21) at the support portions, the curved edges including ends (24, 25) extending in front of a portion of an opposite face of the elastic washer (10), and **characterised in that** it includes two supporting washers (27, 28) housed respectively between the elastic washer and the ends of the curved edges.

2. A sealing element according to claim 1, **characterised in that** the elastic washer (10) is a crenellated washer, consisting of sectors (14) which are adjacent but separate, on at least one periphery.

3. A sealing element according to claim 2, **characterised in that** the elastic washer (10) is formed from a pattern repeated multiple times and consisting of radial segments (11) alternating with outer circumference segments (12) and inner circumference segments (13).

4. A sealing element according to any of the claims 1 to 3, **characterised in that** the casing is made of PTFE.

5. A sealing element according to claim 4, **characterised in that** the PTFE is restructured.

6. A sealing element according to any of the claims 1 to 5, **characterised in that** at least one of the supporting washers has a bead (29, 30) pointing away from the elastic washer and against the end (24, 25) of the curved edge (20, 21).

7. A sealing element according to any of the claims 1 to 6, **characterised in that** at least one of the supporting washers has a bead (29, 30) pointing radially beyond the elastic washer (10) and against the curved edge (20, 21).

8. A sealing element according to any of the claims 1 to 7, **characterised in that** the elastic washer (10) has at least one circular notch (16, 17) to stop one of the supporting washers (26, 27).

9. A sealing element according to any of the claims 1 to 8, **characterised in that** it includes a metal washer, finer than the elastic washer and the supporting washers, on an inner face or an outer face of the strip of the casing.

10. A sealing element according to any of the claims 1 to 9, **characterised in that** the supporting washers are connected by a finer strut.
